(19) Europäisches Patentamt
European Patent Office
Office européen des brevets

(11) **EP 4 644 677 A1**

(12) **EUROPEAN PATENT APPLICATION**

(43) Date of publication:
**05.11.2025 Bulletin 2025/45**

(21) Application number: **25174100.5**

(22) Date of filing: **02.05.2025**

(51) International Patent Classification (IPC):
**F02C 3/10** (2006.01)   **F02C 3/22** (2006.01)
**F02C 7/12** (2006.01)   **F02C 7/224** (2006.01)

(52) Cooperative Patent Classification (CPC):
**F02C 3/10; F02C 3/22; F02C 7/125; F02C 7/224;**
F05D 2220/62; F05D 2220/76; F05D 2260/213;
F05D 2270/20; F05D 2270/303; F05D 2270/304;
F05D 2270/3061

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.05.2024 US 202418654335**

(71) Applicant: **PRATT & WHITNEY CANADA CORP.**
**Longueuil, Québec J4G 1A1 (CA)**

(72) Inventors:
• **STRATTON, Russell**
  **Longueuil, J4G 1A1 (CA)**
• **HOLLEY, Brian M.**
  **Longueuil, J4G 1A1 (CA)**

(74) Representative: **Dehns**
**10 Old Bailey**
**London EC4M 7NG (GB)**

(54) **PARTIAL-ADMISSION TURBINE ASSEMBLY FOR AN AIRCRAFT AND METHOD FOR CONTROLLING SAME**

(57)    An assembly (16) for an aircraft includes a fluid source (64), a first heat exchanger (66), a partial-admission turbine (68), a mechanical load (70), and a control assembly (18). The partial-admission turbine (68) includes a rotational assembly (86) and a plurality of partial-admission turbine stages (88). The rotational assembly (86) includes a bladed turbine rotor (92). The bladed turbine rotor (92) includes a plurality of rotor blade stages (100). Each of the plurality of partial-admission turbine stages (88) includes a respective rotor blade stage (100) of the plurality of rotor blade stages (100). The fluid source (64), the first heat exchanger (66), and the partial-admission turbine (68) sequentially form a portion of a fluid flow path (62) through the assembly (16). The mechanical load (70) is coupled to the rotational assembly (86). The control assembly (18) includes a controller (124) configured to determine a corrected turbine inlet flow and a corrected rotation speed for the partial-admission turbine (68), maintain the corrected turbine inlet flow within an inlet corrected flow threshold range, and maintain the corrected rotation speed within a corrected rotation speed threshold range.

FIG. 2A

FIG. 2B

EP 4 644 677 A1

**Description**

BACKGROUND

1. Technical Field

This disclosure relates generally to an aircraft and, more particularly, to a partial-admission turbine assembly for an aircraft.

2. Background Information

Various systems and methods are known in the art for improving overall aircraft propulsion system efficiency. For example, some aircraft propulsion systems may be configured to capture waste heat (e.g., exhaust heat) and use this waste heat to generate additional mechanical energy for the aircraft propulsion system. While these known systems and methods may be suitable for their intended purposes, there is always room in the art for improvement.

SUMMARY

It should be understood that any or all of the features or embodiments described herein can be used or combined in any combination with each and every other feature or embodiment described herein unless expressly noted otherwise.

According to an aspect of the present disclosure, an assembly for an aircraft includes a fluid source, a first heat exchanger, a partial-admission turbine, a mechanical load, and a control assembly. The fluid source includes a fluid regulator. The partial-admission turbine includes a rotational assembly and a plurality of partial-admission turbine stages. The rotational assembly is mounted for rotation about a rotational axis of the partial-admission turbine. The rotational assembly includes a bladed turbine rotor. The bladed turbine rotor includes a plurality of rotor blade stages. Each of the plurality of partial-admission turbine stages includes a respective rotor blade stage of the plurality of rotor blade stages. The fluid source, the first heat exchanger, and the partial-admission turbine sequentially form a portion of a fluid flow path through the assembly. The fluid regulator is configured to direct a fluid through the first heat exchanger and the partial-admission turbine along the fluid flow path. The mechanical load is coupled to the rotational assembly. The control assembly including a controller. The controller includes a processor connected in signal communication with memory containing instructions which, when executed by the processor, cause the processor to: determine a corrected turbine inlet flow rate of the fluid at the partial-admission turbine, determine a corrected rotation speed of the rotational assembly, control one or both of the fluid regulator or the first heat exchanger to maintain the corrected turbine inlet flow within an inlet corrected flow threshold range, and control one or both of the mechanical load or the first heat exchanger to maintain the corrected rotation speed within a corrected rotation speed threshold range.

In any of the aspects or embodiments described above and herein, the assembly may further include a combustor. The combustor may include a combustion chamber. The combustor may be connected in fluid communication with the partial-admission turbine along the fluid flow path. The partial-admission turbine may be configured to direct the fluid to the combustion chamber along the fluid flow path. The fluid may be a fuel.

In any of the aspects or embodiments described above and herein, the fuel may be a hydrogen fuel.

In any of the aspects or embodiments described above and herein, the assembly may further include a gas turbine engine core assembly. The gas turbine engine core assembly may include a combustor section, a turbine section, and an exhaust section. The combustor section, the turbine section, the exhaust section, and the first heat exchanger may form a core flow path for a combustion gas from the combustor section.

In any of the aspects or embodiments described above and herein, the assembly may further include a second heat exchanger. The second heat exchanger may further form the fluid flow path. The fluid flow path may be a closed-loop fluid flow path. The closed-loop fluid flow path may extend sequentially from the fluid source to the first heat exchanger, the partial-admission turbine, the second heat exchanger, and the fluid source.

In any of the aspects or embodiments described above and herein, the mechanical load may include a bladed propulsor rotor.

In any of the aspects or embodiments described above and herein, the assembly may further include a generator. The mechanical load may include a generator rotor of the generator.

In any of the aspects or embodiments described above and herein, each of the plurality of partial-admission turbine stages may further include a stator vane stage and at least one flow blocking structure.

In any of the aspects or embodiments described above and herein, the plurality of partial-admission turbine stages may include a first stage and a plurality of downstream stages. The at least one flow blocking structure of each of the downstream stages may be clocked in a rotational direction relative to the at least one flow blocking structure of an immediately upstream stage of the plurality of partial-admission turbine stages.

In any of the aspects or embodiments described above and herein, the at least one flow blocking structure may have a circumferential span. The circumferential span may decrease sequentially for the plurality of partial-admission turbine stages.

According to another aspect of the present disclosure, an assembly for an aircraft includes a gas turbine engine, a partial-admission turbine engine, a mechanical load, and a control assembly. The gas turbine engine includes an engine rotational assembly, a turbine section, and an exhaust section. The engine rotational assembly is mounted for rotation about an engine rotational axis of the gas turbine engine. The rotational assembly includes an engine bladed turbine rotor for the turbine section. The turbine section and the exhaust section form a combustion gas flow path. The partial-admission turbine assembly includes a fluid source, a first heat exchanger, and a partial-admission turbine. The fluid source includes a fluid regulator. The first heat exchanger forms a portion of the combustion gas flow path. The partial-admission turbine includes a partial-admission rotational assembly mounted for rotation about a partial-admission rotational axis of the partial-admission turbine. The fluid source, the heat exchanger, and the partial-admission turbine sequentially form a portion of a fluid flow path. The fluid regulator is configured to direct a fluid through the first heat exchanger and the partial-admission turbine along the fluid flow path. The mechanical load is coupled to the partial-admission rotational assembly. The control assembly includes a controller. The controller includes a processor connected in signal communication with memory containing instructions which, when executed by the processor, cause the processor to: determine a corrected turbine inlet flow rate of the fluid at the partial-admission turbine, determine a corrected rotation speed of the partial-admission rotational assembly, control one or both of the fluid regulator or the first heat exchanger to maintain the corrected turbine inlet flow within an inlet corrected flow threshold range, and control one or both of the mechanical load or the first heat exchanger to maintain the corrected rotation speed within a corrected rotation speed threshold range by controlling a rotational loading of the partial-admission rotational assembly.

In any of the aspects or embodiments described above and herein, the mechanical load may be further coupled to the engine rotational assembly.

In any of the aspects or embodiments described above and herein, the mechanical load may include a bladed propulsor rotor.

In any of the aspects or embodiments described above and herein, the assembly may further include a generator. The mechanical load may include a generator rotor of the generator.

In any of the aspects or embodiments described above and herein, the gas turbine engine may further include a combustor section. The combustor section may include a combustor forming a combustion chamber. The combustor may be connected in fluid communication with the partial-admission turbine along the fluid flow path. The partial-admission turbine may be configured to direct the fluid to the combustion chamber along the fluid flow path. The fluid may be a fuel.

In any of the aspects or embodiments described above and herein, the fuel may be a hydrogen fuel.

In any of the aspects or embodiments described above and herein, the assembly may further include a second heat exchanger. The second heat exchanger may further form the fluid flow path. The fluid flow path may be a closed-loop fluid flow path. The closed-loop fluid flow path may extend sequentially from the fluid source to the first heat exchanger, the partial-admission turbine, the second heat exchanger, and the fluid source.

According to another aspect of the present disclosure, a method includes directing a fluid to a partial-admission turbine. The partial-admission turbine includes a rotational assembly. The rotational assembly includes a bladed turbine rotor. The bladed turbine rotor is coupled to a mechanical load. The method further includes driving rotation of the mechanical load with the rotational assembly, determining a corrected turbine inlet flow rate of the fluid at the partial-admission turbine, determining a corrected rotation speed of the rotational assembly, controlling one or both of a flow rate or a temperature of the fluid directed to the partial-admission turbine to maintain the corrected turbine inlet flow rate within an inlet corrected flow threshold range; and controlling one or both of a rotational loading applied to the rotational assembly by the mechanical load or the temperature of the fluid directed to the partial-admission turbine to maintain the corrected rotation speed within a corrected rotation speed threshold range.

In any of the aspects or embodiments described above and herein, the method may further include directing the fluid to a combustor with the partial-admission turbine, and the fluid is a fuel.

In any of the aspects or embodiments described above and herein, directing the fluid to the partial-admission turbine may include directing a liquid phase of the fluid with a pump, changing the liquid phase of the fluid to a gaseous phase, and directing the gaseous phase of the fluid to the partial-admission turbine.

The present disclosure, and all its aspects, embodiments and advantages associated therewith will become more readily apparent in view of the detailed description provided below, including the accompanying drawings. It will be appreciated that the detailed description and drawings are presented for illustrative purposes only and are not intended to be limiting.

BRIEF DESCRIPTION OF THE DRAWINGS

FIG. 1 schematically illustrates a gas turbine engine system for an aircraft.

FIGS. 2A-B schematically illustrate portions of an engine core assembly and a partial-admission turbine assembly coupled with one or more mechanical loads.

FIGS. 3A-B schematically illustrate a portion of different partial-admission turbines.

FIGS. 4A-L schematically illustrate sequential stages for a partial-admission turbine.

FIG. 5 schematically illustrates another partial-admission turbine assembly.

FIG. 6 illustrates a block diagram depicting a method for controlling a partial-admission turbine assembly.

DETAILED DESCRIPTION

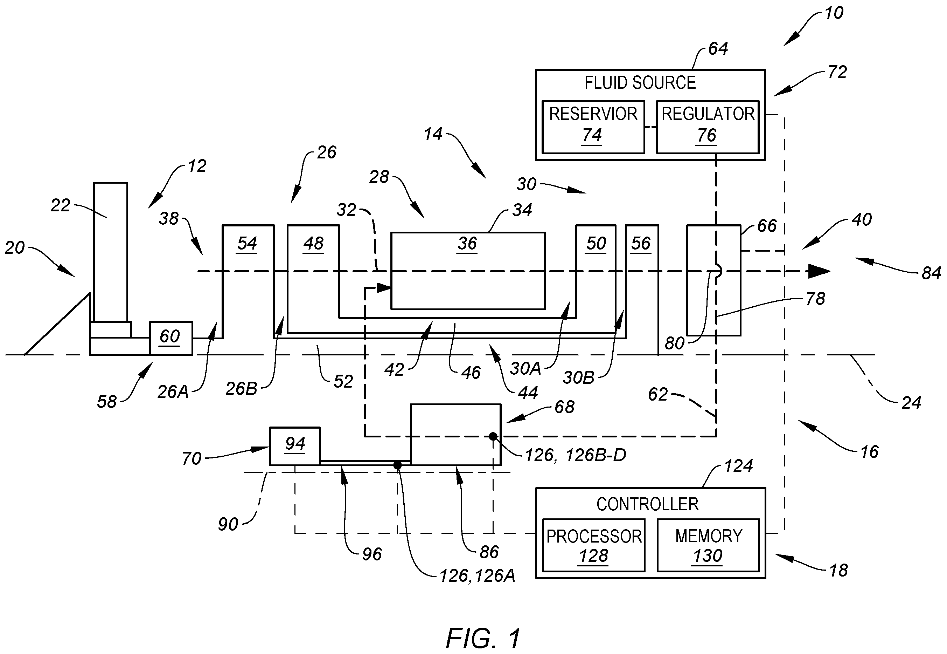

FIG. 1 illustrates a gas turbine engine system 10 for an aircraft. The aircraft may be an airplane, a helicopter, a drone (e.g., an unmanned aerial vehicle (UAV)) or any other manned or unmanned aerial vehicle or system. The engine system 10 may be configured as, or otherwise included as part of, a propulsion system for the aircraft. The engine system 10 may also or alternatively be configured as, or otherwise included as part of, an electric power system for the aircraft. However, for ease of description, the engine system 10 may be generally described below as being (or part of) the aircraft propulsion system. The engine system 10 of FIG. 1 includes a mechanical load 12, an engine core assembly 14, a partial-admission (PA) turbine assembly 16, and a control assembly 18.

The mechanical load 12 may be configured as or otherwise include a rotor 20 mechanically driven by the engine core assembly 14. This driven rotor 20 may be a bladed propulsor rotor 22 (e.g., an air mover) where the engine system 10 is (or is part of) the aircraft propulsion system. The propulsor rotor 22 includes a plurality of rotor blades arranged circumferentially around and connected to at least (or only) one rotor disk or hub. The propulsor rotor 22 may be an open (e.g., un-ducted) propulsor rotor or a ducted propulsor rotor. Examples of the open propulsor rotor include, but are not limited to, a propeller rotor for a turboprop propulsion system, a rotorcraft rotor (e.g., a main helicopter rotor) for a turboshaft propulsion system, a propfan rotor for a propfan propulsion system, and a pusher fan rotor for a pusher fan propulsion system. Examples of the ducted propulsor rotor include, but are not limited to, a fan rotor for a turbofan propulsion system and a (e.g., first stage) compressor rotor for a turbojet propulsion system. Alternatively, the driven rotor 20 may be a generator rotor in an electric power generator (or more generally an electric machine) where the engine system 10 is (or is part of) the electric power system (e.g., an auxiliary power unit (APU) for the aircraft). However, for ease of description, the driven rotor 20 may be generally described below as the propulsor rotor 22 (e.g., the propeller rotor for the turboprop propulsion system).

The engine core assembly 14 extends axially along an axis 24 (e.g., a rotational axis) between an upstream, forward end of the engine core assembly 14 and a downstream, aft end of the engine core assembly 14. The engine core assembly 14 includes a core compressor section 26, a core combustor section 28, a core turbine section 30, and a core flow path 32. The compressor section 26 of FIG. 1 includes a low-pressure compressor (LPC) section 26A and a high-pressure compressor (HPC) section 26B. The combustor section 28 includes a combustor 34 (e.g., an annular combustor). The combustor 34 includes an internal combustion chamber 36 (e.g., an annular combustion chamber). The turbine section 30 of FIG. 1 includes a high-pressure turbine (HPT) section 30A and a low-pressure turbine (LPT) section 30B. The core flow path 32 extends sequentially through the compressor section 26, the combustor section 28, the HPT section 30A, and the LPT section 30B from a core inlet 38 (e.g., an airflow inlet) into the core flow path 32 to a core exhaust 40 (e.g., a combustion gas exhaust) from the core flow path 32. The core inlet 38 may be disposed at (e.g., on, adjacent or proximate) the assembly forward end and the core exhaust 40 may be disposed at the assembly aft end.

Components of the compressor section 26 and the turbine section 30 of FIG. 1 form a first rotational assembly 42 (e.g., a high-pressure spool) and a second rotational assembly 44 (e.g., a low-pressure spool) of the engine core assembly 14. The first rotational assembly 42 and the second rotational assembly 44 are mounted for rotation about the axis 24. The present disclosure, however, is not limited to the foregoing exemplary spool configuration of the engine core assembly 14. For example, aspects of the present disclosure are equally applicable to single-spool configurations, three-spool configurations, power turbine configurations, and the like.

The first rotational assembly 42 includes a first shaft 46, a bladed first compressor rotor 48 for the high-pressure compressor section 26B, and a bladed first turbine rotor 50 for the high-pressure turbine 30A. The first shaft 46 interconnects the bladed first compressor rotor 48 and the bladed first turbine rotor 50.

The second rotational assembly 44 includes a second shaft 52, a bladed second compressor rotor 54 for the low-pressure compressor section 26A, and a bladed second turbine rotor 56 for the low-pressure turbine section 30B. The second shaft 52 interconnects the bladed second compressor rotor 54 and the bladed second turbine rotor 56. The second rotational assembly 44 of FIG. 1 is further coupled to the propulsor rotor 22 (e.g., the driven rotor 20) through a drivetrain 58. This drivetrain 58 may be configured as a geared drivetrain, where a geartrain 60 (e.g., a transmission, a speed change device, an epicyclic geartrain, etc.) is disposed between and operatively couples the propulsor rotor 22 to the second rotational assembly 44 and its bladed second turbine rotor 56. With this arrangement, the propulsor rotor 22 may rotate at a different (e.g., slower) rotational velocity than the second rotational assembly 44 and its bladed second turbine rotor 56. However, the drivetrain 58 may alternatively be configured as a direct drive drivetrain, where the geartrain 60 is omitted. With this arrangement, the propulsor rotor 22 rotates at a common (the same) rotational velocity as the second rotational assembly 44 and its bladed second turbine rotor 56.

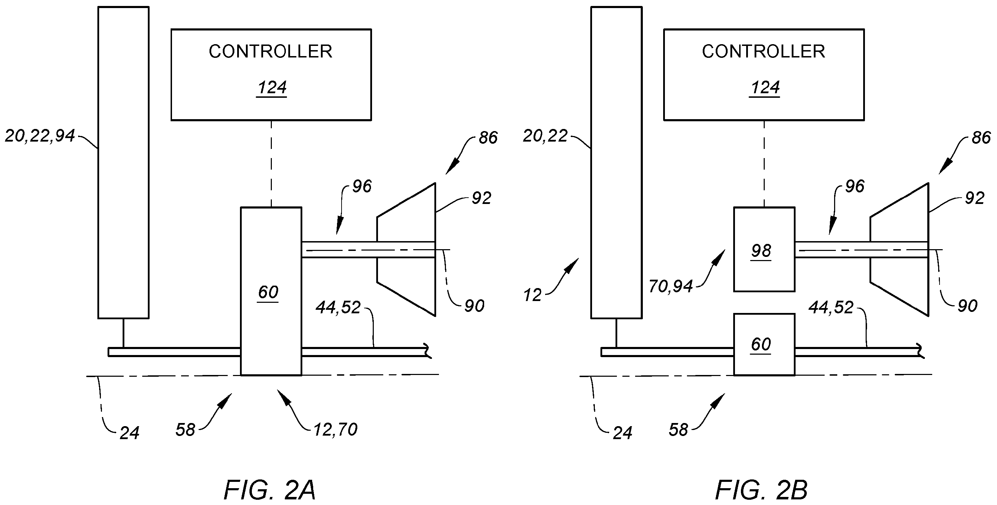

The PA turbine assembly 16 of FIG. 1 includes a fluid flow path 62, a fluid source 64, a heat exchanger 66, a PA turbine 68, and a mechanical load 70. The PA turbine assembly 16 of FIGS. 1 and 2 forms a portion of a fuel system 72 for the engine core assembly 14. The present disclosure, however, is not limited to use of the PA turbine assembly 16 with or forming a fuel system (e.g., the fuel system 72). The fluid flow path 62 (e.g., a fuel flow path) is fluidly coupled with and between an outlet from the fluid source 64 and the combustion chamber 36 (e.g., one or more fuel injectors configured to inject fuel from the fluid flow path 62 into the combustion chamber 36). This fluid flow path 62 extends from the fluid source 64 and its outlet, sequentially through the fluid heat exchanger 66, the PA turbine 68, and the combustion chamber 36. Accordingly, the fluid flow path 62 of FIG. 1 may be understood as an open-loop fluid flow path.

The fluid source 64 of FIG. 1 includes a fluid reservoir 74 and a fluid flow regulator 76. The fluid reservoir 74 is configured to store a quantity of fluid (e.g., fuel in its liquid phase) before, during, and/or after engine system 10 operation. The fluid reservoir 74, for example, may be configured as or otherwise include a tank, a cylinder, a pressure vessel, a bladder or any other type of (e.g., insulated) fluid storage container. The fluid flow regulator 76 is configured to direct a flow of the fluid from the fluid reservoir 74 to the combustion chamber 36 (e.g., to the one or more fuel injectors) through the fluid flow path 62. The fluid flow regulator 76, for example, may be configured as or otherwise include a fluid compressor, a fluid pump, and/or a fluid valve (or valves).

The heat exchanger 66 includes an internal fluid passage 78 and an internal combustion gas passage 80 which is fluidly discrete from the fluid passage 78. The fluid passage 78 forms a portion of the fluid flow path 62. The combustion gas passage 80 forms a portion of the core flow path 32. This portion of the core flow path 32 formed by the combustion gas passage 80 of FIG. 1 is arranged between the bladed second turbine rotor 56 and the core exhaust 40, for example, within an exhaust section 84 of the engine system 10. However, in other embodiments, the heat exchanger 66 and its combustion gas passage 80 may alternatively be arranged elsewhere along the core flowpath 32 downstream of the combustor section 28. The heat exchanger 66 may be configured to selectively vary a flow rate of the fluid along the fluid passage 78 and/or the combustion gas along the combustion gas passage 80 to control a temperature of the fluid exiting the heat exchanger 66 along the fluid flow path 62. The heat exchanger 66 of FIG. 1 is schematically shown as a single pass, crossflow heat exchanger. The heat exchanger 66 of the present disclosure, however, is not limited to such an exemplary arrangement. The heat exchanger 66, for example, may alternatively be configured as parallel flow heat exchanger, a counterflow heat exchanger, or some hybridization or superposition of these general configurations. Moreover, the fluid passage 78 and/or the combustion gas passage 80 may alternatively make two or more passes within the heat exchanger 66. While the heat exchanger 66 is described herein for the core exhaust 40 (e.g., transferring heat energy between the combustion gas along the combustion gas passage 80 to the fluid along the fluid passage 78), the heat exchanger 66 may alternatively be any heat exchanger or heat source configured to add heat energy to the fluid along the fluid flow path 62, as will be described in further detail below.

Referring to FIGS. 1-4, the PA turbine 68 includes a PA rotational assembly 86 and a plurality of PA stages 88. The PA rotational assembly 86 is mounted for rotation about an axis 90 (e.g., a rotational axis) of the PA turbine 68. The axis 90 may typically be different than (e.g., offset from) the axis 24. The PA rotational assembly 86 includes a PA bladed turbine rotor 92. The PA bladed turbine rotor 92 is coupled to and rotatable with a rotor 94 of the mechanical load 70 through a drivetrain 96. The drivetrain 96 may be a geared drivetrain or a direct drive drivetrain as described above, for example. As shown in FIG. 2A, the driven rotor 94 may be the same as the driven rotor 20. Both the PA bladed turbine rotor 92 and the second rotational assembly 44 of FIG. 2A, for example, are coupled to the propulsor rotor 22 through the geartrain 60, which geartrain 60 may form a portion of the mechanical load 70 for the PA turbine assembly 16. Thus, energy may be extracted from the fluid flow along the fluid flow path 62, as described below in further detail, to boost mechanical drive power to the propulsion rotor 22 (e.g., the driven rotor 20). The mechanical load 70 (e.g., the geartrain 60) may be configured to selectively apportion mechanical loading between the PA bladed turbine rotor 92 and the second rotational assembly 44. For example, the mechanical load (e.g., the geartrain 60) may include or form a differential gearbox, a variable-ratio gearbox, or the like coupling the second rotational assembly 44 and the PA bladed turbine rotor 92 together with the driven rotor 20, 94 (e.g., the bladed propulsor rotor 22). Alternatively, as shown in FIG. 1, the driven rotor 94 may be discrete from the driven rotor 20. For example, where the driven rotor 20 is the propulsor rotor 22, the driven rotor 94 may be configured as a generator rotor 98 in an electric power generator (or more generally an electric machine), as shown in FIG. 2B. This electric power generator may supply electrical power to one or more components of the engine system 10 and/or one or more other aircraft components outside of the engine system 10.

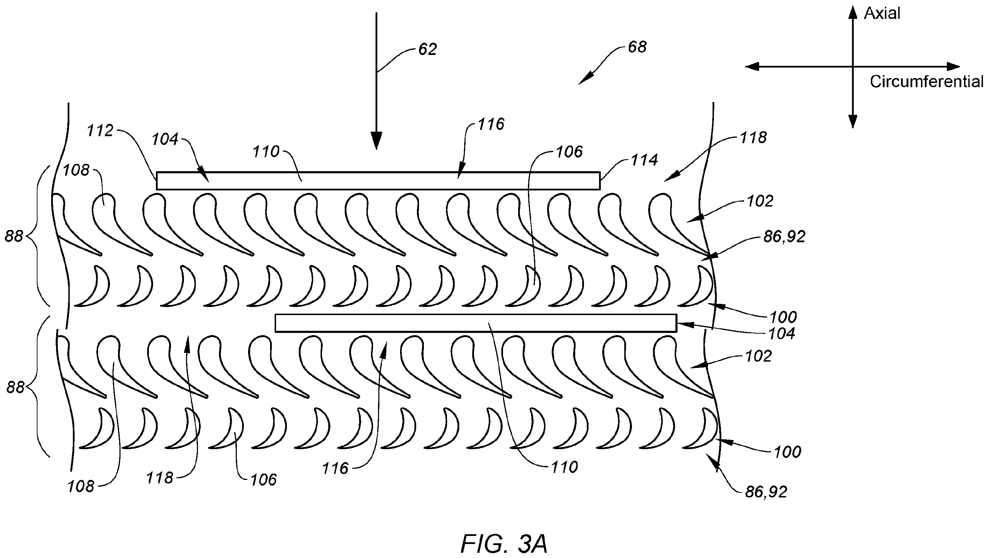

FIGS. 3A-B schematically illustrate a portion of the PA turbine 68 including the PA rotational assembly 86 (e.g., the PA bladed turbine rotor 92) and the PA stages 88 along an axial direction and a circumferential direction (e.g., relative to the axis 90; see FIG. 1). The PA stages 88 are arranged axially within PA turbine 68. For example, the PA stages 88 may be sequentially arranged (e.g., as a first PA stage, a second PA stage, a third PA stage, etc.) in a direction of the fluid flow path 62 (e.g., an annular fluid flow path 62 portion) through the PA turbine 68. Each of the PA stages 88 includes a rotor blade stage 100 of the PA bladed turbine rotor 92 and a stator vane stage 102. One, more than one, or each of the PA stages 88 additionally includes one or more flow blocking structures 104.

The rotor blade stage 100 includes a plurality of rotor blades 106 arranged circumferentially around and connected to a rotor disk or hub of the PA bladed turbine rotor 92. The stator vane stage 102 includes a plurality of stator vanes 108 arranged circumferentially around the axis 90. For example, the stator vanes 108 may be mounted to (e.g., fixedly mounted to) and circumferentially arranged on a fixed static structure (e.g., a turbine case) of the PA turbine 68. Each of the stator vanes 108 is shaped to direct fluid flow onto the immediately downstream rotor blades 106.

Each of the flow blocking structures 104 includes a blocking body 110 disposed within the fluid flow path 62 through the PA turbine 68. Like the stator vanes 108, the blocking body 110 may be mounted to (e.g., fixedly mounted to) the fixed static structure of the PA turbine 68. The blocking body 110 extends circumferentially between and to a first circumferential end 112 of the blocking body 110 and a second circumferential end 114 of the blocking body 110. Accordingly, the blocking body 110 may form an arcuate body obstructing fluid flow through the PA turbine 68 along the fluid flow path 62 for a circumferential portion of a respective one of the PA stages 88 (e.g., circumferentially between the first circumferential end 112 and the second circumferential end 114.). While one blocking body 110 is shown for each of the PA stages 88 of FIGS. 3A-B, one, more than one, or each of the PA stages 88 may include two or more blocking bodies 110, as will be described below in further detail. The flow blocking structures 104 of a respective one of the PA stages 88 thereby form a closed circumferential flow portion 116 (e.g., an obstructed circumferential portion through which the fluid may not flow along the fluid flow path 62) and an open circumferential flow portion 118 (e.g., an unobstructed circumferential portion through which the fluid may flow along the fluid flow path 62) of the respective one of the PA stages 88.

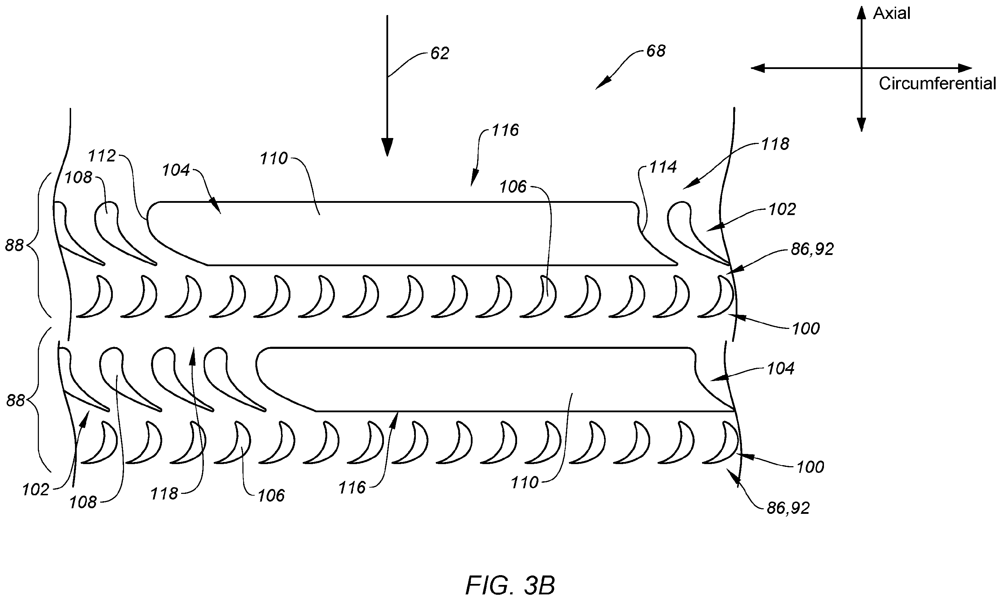

In each of the PA stages 88, the stator vane stage 102 is disposed upstream of the rotor blade stage 100 to direct fluid flow along the fluid flow path 62 onto and through the rotor blades 106. As shown in FIG. 3A, for a respective one of the PA stages 88, the flow blocking structures 104 may be disposed upstream of the stator vane stage 102. As alternatively shown in FIG. 3B, for a respective one of the PA stages 88, the flow blocking structures 104 may form a portion of the stator vane stage 102 or otherwise be disposed axially coincident with the stator vane stage 102.

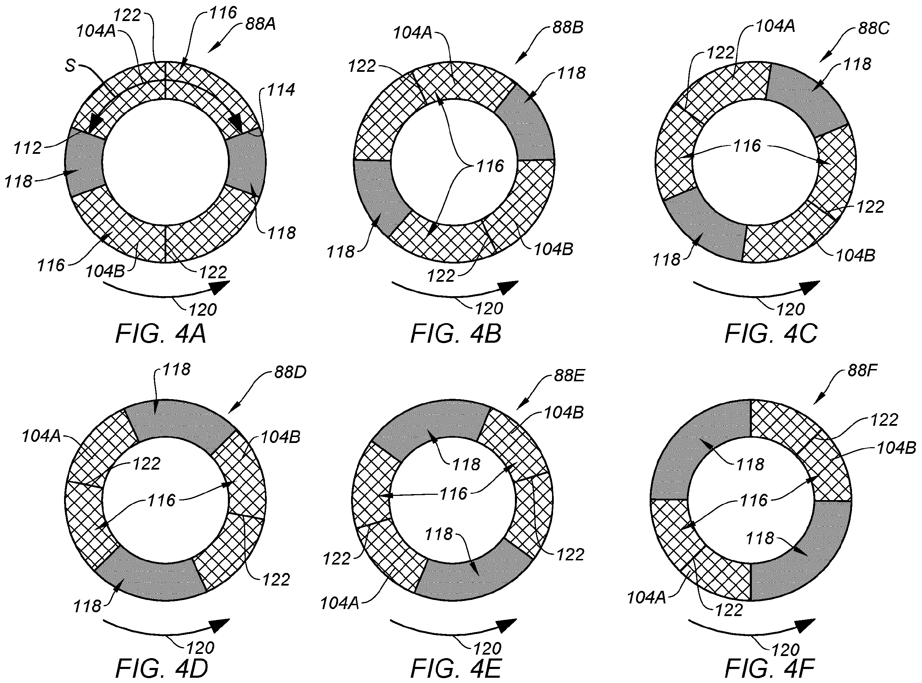

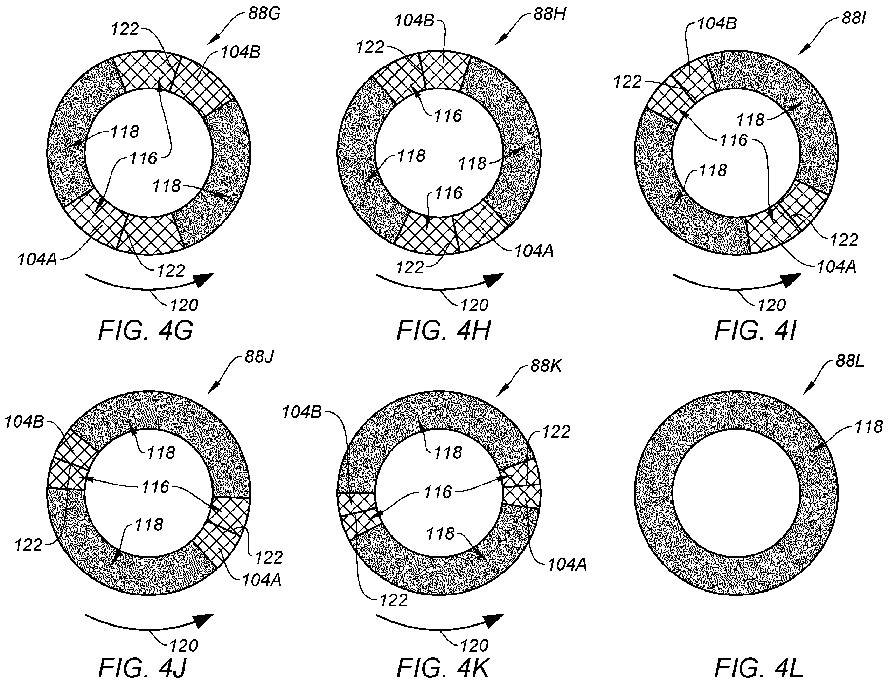

FIGS. 4A-L schematically illustrate the PA stages 88 sequentially in an upstream-to-downstream direction relative to the fluid flow path 62 (e.g., from FIG. 4A to FIG. 4L). FIGS. 4A-L may therefore be understood to illustrate the sequential PA stages 88A-L for the PA turbine 68. While the PA stages 88, 88A-L of FIGS. 4A-L include twelve PA stages 88, the present disclosure is not limited to any particular number of stages for the PA turbine 68. FIGS. 4A-L illustrate the flow blocking structures 104, the closed circumferential flow portion 116, and the open circumferential flow portion 118 for each of the respective PA stages 88A-L along a plane orthogonal to the axis 90. The PA stages 88A-K each include two circumferentially-opposite flow blocking structures 104; i.e., a first flow blocking structure 104A and a second flow blocking structure 104B. The first flow blocking structure 104A and the second flow blocking structure 104B collectively form the closed circumferential flow portion 116 and the open circumferential flow portion 118 for each of the PA stages A-K. One or more of the PA stages 88 may not include a flow blocking structure 104 as shown, for example, in FIG. 4L for the PA stage 88L.

As shown in FIGS. 4A-L, a circumferential position and/or a circumferential span of the flow blocking structures 104 of each PA stage 88A-L may be different than the circumferential position and/or the circumferential span of the flow blocking structures 104 of each other PA stage 88A-L. In general, the flow blocking structures 104 of each PA stage 88A-L may be circumferentially offset ("clocked") relative to each axially adjacent PA stage 88A-L by a clocking angle. The clocked configuration of the PA stages 88 facilitates control of the fluid flow path 62 within the PA turbine 68 such that each PA stage 88A-L directs fluid flow along the fluid flow path 62 into the open circumferential flow portion 118 of the immediately subsequent (e.g., axially adjacent) PA stage 88A-L. The flow blocking structures 104 of each PA stage 88A-L may be clocked in a rotational direction 120 relative to the flow blocking structures 104 of the immediately upstream (e.g., axially adjacent) PA stage 88A-L. For example, a circumferential center position 122 of each of the flow blocking structures 104, 104A-B may be clocked (e.g., circumferentially offset by the clocking angle) in the rotational direction 120 relative to a counterpart one of the flow blocking structures 104, 104A-B of the immediately upstream (e.g., axially adjacent) PA stage 88A-L. Additionally, a circumferential span S of the flow blocking structures 104 may decrease in each sequential PA stage 88A-L such that a cross-sectional flow area (e.g., orthogonal to the axis 90) of the open circumferential flow portion 118 may increase in each sequential PA stage 88A-L and a cross-sectional blocked area (e.g., orthogonal to the axis 90) of the closed circumferential flow portion 116 may decrease in each sequential PA stage 88A-L. The circumferential span S may be a circumferential distance extending between and to the first circumferential end 112 and the second circumferential end 114.

Referring again to FIGS. 1 and 2A-B, the control assembly 18 includes a controller 124 and a plurality of sensors 126. The controller 124 includes a processor 128 connected in communication (e.g., signal communication with memory 130. The processor 128 may include any type of computing device, computational circuit, or any type of process or processing circuit capable of executing a series of instructions that are stored in the memory 130, thereby causing the processor 128 to perform or control one or more steps or other processes. The processor 128 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the engine system 10 to accomplish the same algorithmically and/or by coordination of engine system 10. The memory 130 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 124. The controller 124 may include, or may be in communication with, an input device that enables a user to enter data and/or instructions, and may include, or be in communication with, an output device configured, for example to display information (e.g., a visual display or a printer), or to transfer data, etc. Communications between the controller 124 and components of the gas turbine engine system 10 (e.g., the fluid regulator 76, the mechanical load 70, and/or the heat exchanger 66) may be via a hardwire connection or via a wireless connection. A person of skill in the art will recognize that portions of the controller 124 may assume various forms (e.g., digital signal processor, analog device, etc.) capable of performing the functions described herein.

The controller 124 may form or otherwise be part of an electronic engine controller (EEC) for the engine system 10. The EEC may control operating parameters of the engine core assembly 14 including, but not limited to, fuel flow, stator vane position (e.g., variable compressor inlet guide vane (IGV) position), compressor air bleed valve position, shaft (e.g., first shaft 46 and/or second shaft 52) torque and/or rotation speed, etc. so as to control an engine power or performance of the engine system 10. For example, the EEC may modulate fuel flow to the combustor 34 (e.g., the combustion chamber 36) to obtain a desired output power of the engine system 10. In some embodiments, the EEC may be part of a full authority digital engine control (FADEC) system for the engine system 10.

The sensors 126 are connected in signal communication with the controller 124. The sensors 126 are configured to measure operating parameters of the PA turbine 68 including, but not limited to, the PA rotational assembly 86 rotation speed (N), the PA turbine 68 inlet fluid temperature ($T_{in}$), the PA turbine 68 inlet fluid pressure ($P_{in}$), and the PA turbine 68 inlet fluid mass flow rate ($\dot{m}_{in}$). Accordingly, the sensors 126 may include a rotation speed sensor 126A, a temperature sensor 126B, and a pressure sensor 126C to measure the rotation speed (N), the inlet fluid temperature ($T_{in}$), and the inlet fluid pressure ($P_{in}$), respectively. The sensors 126 may additionally include a mass flow rate sensor 126D configured to measure the mass flow rate ($\dot{m}_{in}$). The mass flow rate sensor 126D may include an assembly of pressure sensors, temperature sensors, flow sensors, etc. (e.g., including the temperature sensor 126B and the pressure sensor 126C) configured to facilitate measurement of the mass flow rate ($\dot{m}_{in}$). Alternatively, the mass flow rate ($\dot{m}_{in}$) may be calculated (e.g., synthesized) by the controller 124 using measured and/or known operating values for the fluid source 64 (e.g., fluid pressure of the reservoir 74, fluid regulator 76 flow rate, valve position, or pump speed, etc.), the core exhaust 40 temperature, the inlet fluid temperature ($T_{in}$), and the inlet fluid pressure ($P_{in}$), etc., and the present disclosure is not limited to any particular apparatus or method for determining the mass flow rate ($\dot{m}_{in}$).

Referring again to FIG. 1, the fluid delivered by the PA turbine assembly 16 to the combustor section 28 and its combustor 34 may be a fuel. The fuel may be a hydrocarbon fuel such as, but not limited to, propane or liquified natural gas (LNG). Alternatively, the fuel may be a non-hydrocarbon fuel (e.g., a hydrocarbon free fuel) such as, but not limited to, hydrogen ($H_2$) or ammonia ($NH_3$). For example, the PA turbine assembly 16 may direct hydrogen fuel into the combustor 34 and into its combustion chamber 36. This fuel may be stored within the fluid source 64 and its fluid reservoir 74 in a liquid phase. The fluid reservoir 74, in other words, may contain a quantity of the fuel as liquid (e.g., liquid hydrogen). The fuel, however, may be injected or otherwise introduced into the combustion chamber 36 (e.g., by the fuel injectors) in a gaseous phase.

During operation of the engine system 10 of FIG. 1, the PA turbine assembly 16 directs a flow of the fuel (completely or substantially completely in its liquid phase) within the fluid flow path 62 into the heat exchanger 66 (e.g., the fluid passage 78). For example, the fluid regulator 76 (e.g., a liquid pump) may direct (e.g., pump) the liquid-phase fuel from the fluid reservoir 74 into and through the heat exchanger 66. The engine core assembly 14 also directs a flow of gas - the combustion gas - into the heat exchanger 66 (e.g., the combustion gas passage 80) along the core flow path 32. Here, a temperature of the combustion gas entering the heat exchanger 66 is (e.g., significantly) higher than a temperature of the fuel entering the heat exchanger 66. The heat exchanger 66 may thereby transfer heat energy from the combustion gas into the fuel. This transfer of heat energy (heat transfer) from the combustion gas to the fuel cools the combustion gas and heats the fuel. The heating of the fuel facilitates a complete or substantially complete phase change of the fuel from the liquid phase to the gaseous phase. Moreover, the transfer of heat energy recuperates energy from the combustion gas which may be used for powering the PA turbine 68 and/or preparing the fuel for combustion in the combustion chamber 36.

The PA turbine assembly 16 directs the heated fuel (in its gaseous phase) within the fluid flow path 62 from the heat exchanger 66 to the PA turbine 68 through the PA stages 88 for expansion across the PA bladed turbine rotor 92. Within the PA turbine 68, the expansion of the fuel may drive rotation of the PA bladed turbine rotor 92 about the axis 90. As the PA bladed turbine rotor 92 rotates, the rotor blades 106 pass through regions of fluid flow (e.g., the open circumferential flow portion 118) and regions of no fluid flow (e.g., the closed circumferential flow portion 116). This configuration of the PA turbine 68 and its PA stages 88, 88A-L may be particularly useful for extracting mechanical energy from high pressure and low flow rate fluid (e.g., fuel) systems where gas path dimensions may be limited. The present disclosure, however, is not limited to any particular fluid pressure or fluid flow rate for the PA turbine assembly 16. The rotation of the PA bladed turbine rotor 92 may drive rotation of the mechanical load 70 (e.g., the driven rotor 20, the driven rotor 94, the generator rotor 98, etc.). The PA turbine assembly 16 subsequently directs the expanded fuel within the fluid flowpath 62 from the PA turbine 68 to the combustor section 28 (e.g., the fuel injectors) for injection into the combustion chamber 36.

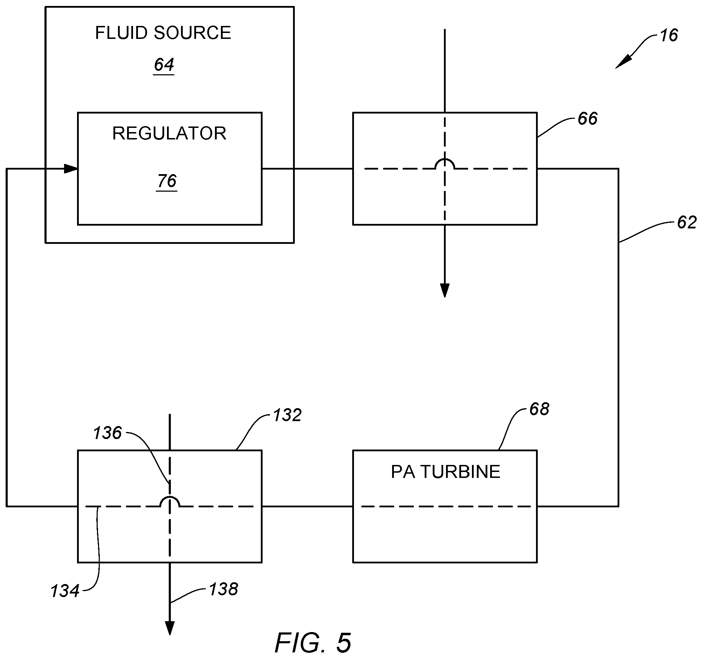

Referring to FIG. 5, in some embodiments, the PA turbine assembly 16 may alternatively be configured to form a closed-loop of the fluid flow path 62. The fluid flow path 62 of FIG. 5 extends from the fluid source 64 (e.g., the fluid regulator 76), through the heat exchanger 66, through the PA turbine 68, through a heat exchanger 132 of the PA turbine assembly 16, and back to the fluid source 64. The heat exchanger 132 includes an internal fluid passage 134 and an internal cooling medium passage 136 which is fluidly discrete from the fluid passage 134. The fluid passage 134 forms a portion of the fluid flow path 62. The cooling medium passage 136 is connected in fluid communication with a cooling medium source (e.g., an ambient air source, a refrigerant source, a fuel source, etc.) with directs a cooling medium 138 through the cooling medium passage 136. The heat exchanger 132 of FIG. 5 is schematically shown as a single pass, crossflow heat exchanger. The heat exchanger 132 of the present disclosure, however, is not limited to such an exemplary arrangement. The heat exchanger 132, for example, may alternatively be configured as parallel flow heat exchanger, a counterflow heat exchanger, or some hybridization or superposition of these general configurations. Moreover, the fluid passage 134 and/or the cooling medium passage 136 may alternatively make two or more passes within the heat exchanger 132.

In contrast to the PA turbine assembly 16 of FIG. 1, the PA turbine assembly 16 of FIG. 5 does not deliver a fuel to the combustor section 28. The fluid recirculated by the PA turbine assembly 16 within the closed-loop fluid flow path 62 may be any suitable fluid such as, but not limited to, hydrogen, nitrogen, water, supercritical carbon dioxide ($sCO_2$), or the like. During operation of the engine system 10 (see FIG. 1), the PA turbine assembly 16 directs a flow of the fluid (completely or substantially completely in its liquid phase) within the fluid flow path 62 into the heat exchanger 66 (e.g., the fluid passage 78). The engine core assembly 14 also directs a flow of gas - the combustion gas - into the heat exchanger 66 (e.g., the combustion gas passage 80) along the core flow path 32 (see FIG. 1). Here, a temperature of the combustion gas entering the heat exchanger 66 is (e.g., significantly) higher than a temperature of the fluid entering the heat exchanger 66 along the fluid flow path 62. The heat exchanger 66 may thereby transfer heat energy from the combustion gas into the fluid. This transfer of heat energy (heat transfer) from the combustion gas to the fluid cools the combustion gas and heats the fluid. The heating of the fluid facilitates a complete or substantially complete phase change of the fluid from the liquid phase to the gaseous phase. In particular, the transfer of heat energy recuperates energy from the combustion gas which may be used for powering the PA turbine 68.

The PA turbine assembly 16 directs the heated fluid within the fluid flow path 62 from the heat exchanger 66 to the PA turbine 68 through the PA stages 88 for expansion across the PA bladed turbine rotor 92. Within the PA turbine 68, the expansion of the fluid may drive rotation of the PA bladed turbine rotor 92 about the axis 90. The rotation of the PA bladed turbine rotor 92 may drive rotation of the mechanical load 70 (e.g., the driven rotor 20, the driven rotor 94, the generator rotor 98, etc.). The PA turbine assembly 16 subsequently directs the expanded fluid within the fluid flowpath 62 from the PA turbine 68 to the heat exchanger 132 (e.g., the fluid passage 134). Here, a temperature of the cooling medium 138 entering the heat exchanger 132 is (e.g., significantly) lower than a temperature of the fluid entering the heat exchanger 132. The heat exchanger 132 may thereby transfer heat energy from the fluid into the cooling medium 138. This transfer of heat energy (heat transfer) from the fluid to the cooling medium 138 cools the fluid and heats the cooling medium 138. The cooling of the fluid facilitates a complete or substantially complete phase change of the fluid from the gaseous phase to the liquid phase. The PA turbine assembly 16 then directs the fluid back into and through the fluid source 64 (e.g., in its liquid phase).

The clocking angles for a partial-admission turbine, such as the PA turbine 68, may be mechanically fixed and defined for particular design conditions of the partial-admission turbine including rotor speed, fluid flow rate, pressure, and temperature. However, changes in aircraft operating conditions (e.g., power, altitude, airspeed, etc.), may cause the partial-admission turbine to operate outside of these design conditions and thereby lead to or contributes to misalignment of the fluid directed from the exit of each turbine stage into the open circumferential flow portion 118 of the immediately subsequent (e.g., downstream) turbine stage. This misalignment of the fluid flow relative to design conditions of the partial-admission turbine may be referred to as "clocking misalignment" and may negatively impact the efficiency and performance of the partial-admission turbine.

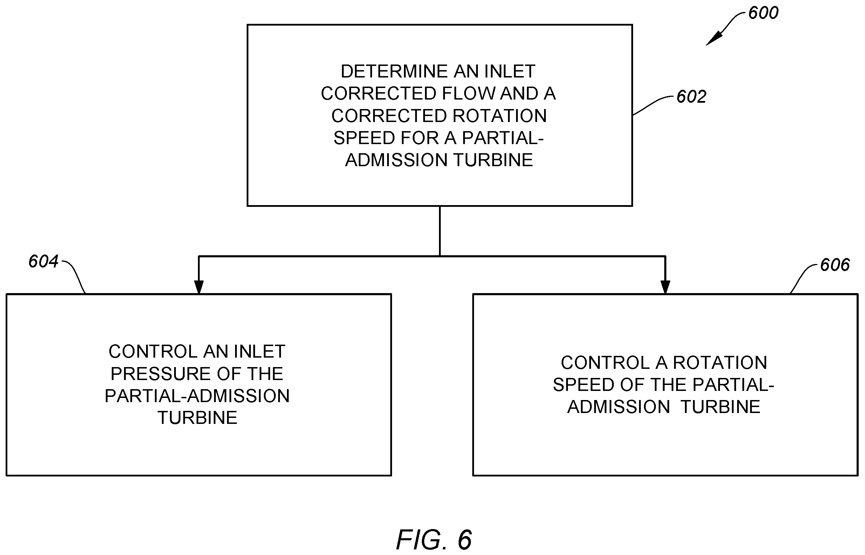

Referring to FIG. 6, a method 600 for controlling a partial-admission turbine assembly (e.g., the PA turbine assembly 16) is provided. In particular, the method 600 may include controlling components of the PA turbine assembly 16 to facilitate reducing or preventing clocking misalignment of the PA turbine 68 and its PA stages 88. FIG. 6 illustrates a flowchart for the method 600. For ease of explanation, the method 600 is described herein for the PA turbine assembly 16 as shown, for example, in FIGS. 1-5. The controller 124 may perform and/or control one or more steps of the method 600. For example, the memory 130 may include instructions which, when executed by the processor 128, cause the processor 128 to perform and/or control one, more than one, or all of the steps of the method 600. The method 600, however, is not limited to use with the PA turbine assembly 16 of the present disclosure. Unless otherwise noted herein, it should be understood that the steps of method 600 are not required to be performed in the specific sequence in which they are discussed below and, in some embodiments, the steps of the method 600 may be performed separately or simultaneously.

Step 602 includes determining (e.g., with the controller 124) an inlet corrected flow ($W_{c\text{-}in}$) of the fluid at (e.g., on, adjacent, or proximate) the PA turbine 68 inlet and a corrected rotation speed ($N_c$) of the PA rotational assembly 86 (e.g., the PA bladed turbine rotor 92). The inlet corrected flow ($W_{c\text{-}in}$) may be determined using the PA turbine 68 inlet fluid mass flow rate ($\dot{m}_{in}$), the PA

turbine 68 inlet fluid temperature ($T_{in}$), and the PA turbine 68 inlet fluid pressure ($P_{in}$). The controller 124 may measure and/or calculate (e.g., using the sensors 126, 126A-D) the PA turbine 68 inlet fluid mass flow rate ($\dot{m}_{in}$), the PA turbine 68 inlet fluid temperature ($T_{in}$), and the PA turbine 68 inlet fluid pressure ($P_{in}$) and, using values of these determined parameters, calculate or otherwise determine the inlet corrected flow ($W_{c\text{-}in}$). For example, the inlet corrected flow ($W_{c\text{-}in}$) may be determined (e.g., by the controller 124) using the follow equation **[1]**:

$$W_{c-in} = \frac{\dot{m}_{in}\sqrt{T_{in}}}{P_{in}} \qquad \textbf{[1]}$$

The corrected rotation speed ($N_c$) may be determined using the PA rotational assembly 86 rotation speed (N) and the PA turbine 68 inlet fluid temperature ($T_{in}$). The controller 124 may measure and/or calculate (e.g., using the sensors 126, 126A-D) PA rotational assembly 86 rotation speed (N) and the PA turbine 68 inlet fluid temperature ($T_{in}$) and, using values of these determined parameters, calculate or otherwise determine the corrected rotation speed ($N_c$). For example, the corrected rotation speed ($N_c$) may be determined (e.g., by the controller 124) using the follow equation **[2]**:

$$N_c = \frac{N}{\sqrt{T_{in}}} \qquad \textbf{[2]}$$

Step 604 includes controlling (e.g., with the controller 124) the PA turbine assembly 16 to maintain the determined inlet corrected flow ($W_{c\text{-}in}$) (see step 602) constant or substantially constant, for example, at a design inlet corrected flow ($W_{c\text{-}in}$) for the PA turbine 68. Step 604 may include controlling (e.g., modulating) the PA turbine 68 inlet fluid pressure ($P_{in}$) (e.g., in response to changes to the inlet fluid mass flow rate ($\dot{m}_{in}$)) to maintain the determined inlet corrected flow ($W_{c\text{-}in}$) constant or substantially constant, for example, within an inlet corrected flow ($W_{c\text{-}in}$) threshold range. The controller 124 may control the PA turbine 68 inlet fluid pressure ($P_{in}$) by controlling the fluid source 64 (e.g., a fuel pump of the fluid regulator 76). In some embodiments, a flow rate of the fluid (e.g., a fuel) directed to the PA turbine 68 (e.g., the PA turbine 68 inlet fluid mass flow rate ($\dot{m}_{in}$)) by the fluid source 64 may be a function of a fuel flow control operation (e.g., for the engine system 10). For example, the controller 124 may control the fluid source 64 to supply a specified quantity of fuel to the combustor 34 (e.g., the combustion chamber 36) to obtain a desired output power of the engine system 10. Alternatively, the fluid source 64 may be exogenously controlled by another electronic control system (e.g., by an EEC or FADEC for the engine system 10) independent of the controller 124 to supply a specified quantity of fuel to the combustor 34 to obtain a desired output power of the engine system 10. For a closed-loop configuration of the PA turbine assembly 16 and its fluid flow path 62, step 604 may include controlling both the inlet fluid pressure ($P_{in}$) and the inlet fluid mass flow rate ($\dot{m}_{in}$) (e.g., with the fluid regulator 76). Step 604 may additionally or alternatively include controlling (e.g., modulating) a temperature of the fluid supplied to the PA turbine 68 (e.g., the PA turbine 68 inlet fluid temperature ($T_{in}$)) to maintain the determined corrected rotation speed ($N_c$) constant or substantially constant, for example, within the corrected rotation speed ($N_c$) threshold range. The inlet fluid temperature ($T_{in}$) may be controlled using a variable upstream heat source and/or by controlling heat transfer to the fluid along the fluid flow path 62. For example, the inlet fluid temperature ($T_{in}$) may be controlled by controlling the fluid regulator 76 and/or the heat exchanger 66 to vary a flow rate of the fluid through the heat exchanger 66 along the fluid flow path 62. Routine experimentation and/or analysis may be performed by one of ordinary skill in the art to select an inlet corrected flow ($W_{c\text{-}in}$) threshold range suitable for reducing or preventing clocking misalignment for the PA turbine 68 and its PA stages 88, in accordance with and as informed by one or more aspects of the present disclosure.

Step 606 includes controlling (e.g., with the controller 124) the PA turbine assembly 16 to maintain the determined corrected rotation speed ($N_c$) (see step 602) constant or substantially constant, for example, at a design corrected rotation speed ($N_c$) for the PA turbine 68. Step 606 may include controlling (e.g., modulating) the PA rotational assembly 86 rotation speed ($N$) (e.g., in response to changes to the inlet fluid temperature ($T_{in}$)) to maintain the determined corrected rotation speed ($N_c$) constant or substantially constant, for example, within a corrected rotation speed ($N_c$) threshold range. The controller 124 may control the PA rotational assembly 86 rotation speed ($N$) by controlling a mechanical loading (e.g., a rotational loading) applied to the PA rotational assembly 86 (e.g., the PA bladed turbine rotor 92) by the mechanical load 70. For example, the controller 124 may control the mechanical load 70 to apply more or less rotational load to the PA rotational assembly 86 to maintain the determined corrected rotation speed ($N_c$) constant or substantially constant, for example, within a corrected rotation speed ($N_c$) threshold range. Step 606 may additionally or alternatively include controlling (e.g., modulating) a temperature of the fluid supplied to the PA turbine 68 (e.g., the PA turbine 68 inlet fluid temperature ($T_{in}$)) to maintain the determined corrected rotation speed ($N_c$) constant or substantially constant, for example, within the corrected rotation speed ($N_c$) threshold range. The inlet fluid temperature ($T_{in}$) may be controlled using a variable upstream heat source and/or by controlling heat transfer to the fluid along the fluid flow path 62. For example, the inlet fluid temperature ($T_{in}$) may be controlled by controlling the fluid regulator 76 and/or the heat exchanger 66 to vary a flow rate of the fluid through the heat exchanger 66 along the fluid flow path 62. Routine experimentation and/or analysis may be performed by one of ordinary skill in the art to select a corrected rotation speed ($N_c$) threshold range suitable for reducing or preventing clocking misalignment for the PA turbine 68 and its PA stages 88, in accordance with and as informed by one or more aspects of the present disclosure.

For example, in embodiments in which the PA rotational assembly 86 and the second rotational assembly 44 are coupled to the driven rotor 20 (e.g., the propulsor rotor 22) through the geartrain 60 (see FIG. 2A), the controller 124 may control the geartrain 60 to apportion mechanical loading of the driven rotor 20 between the PA rotational assembly 86 and the second rotational assembly 44. The controller 124 may control the geartrain 60 to reduce mechanical loading of the PA rotational assembly 86 (e.g., by shifting mechanical load to the second rotational assembly 44) to increase the PA rotational assembly 86 rotation speed ($N$) or increase mechanical loading of the PA rotational assembly 86 (e.g., by shifting mechanical load from the second rotational assembly 44) to decrease the PA rotational assembly 86 rotation speed ($N$). Alternatively for example, in embodiments in which the PA rotational assembly 86 is coupled to the generator rotor 98 by the drivetrain 96, the controller 124 may control an electrical loading of the generator to control mechanical loading of the PA rotational assembly 86, thereby increasing or decreasing the PA rotational assembly 86 rotation speed ($N$).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and subcombinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

**Claims**

1. An assembly for an aircraft, the assembly comprising:

a fluid source including a fluid regulator;
a first heat exchanger;
a partial-admission turbine including a rotational assembly and a plurality of partial-admission turbine stages, the rotational assembly is mounted for rotation about a rotational axis of the partial-admission turbine, the rotational assembly includes a bladed turbine rotor, the bladed turbine rotor includes a plurality of rotor blade stages, and each of the plurality of partial-admission turbine stages includes a respective rotor blade stage of the plurality of rotor blade stages;
the fluid source, the first heat exchanger, and the partial-admission turbine sequentially form a portion of a fluid flow path through the assembly, and the fluid regulator is configured to direct a fluid through the first heat exchanger and the partial-admission turbine along the fluid flow path;
a mechanical load coupled to the rotational assembly; and
a control assembly including a controller, the controller includes a processor connected in signal communication with memory containing instructions which, when executed by the processor, cause the processor to:

determine a corrected turbine inlet flow rate of the fluid at the partial-admission turbine;
determine a corrected rotation speed of the rotational assembly;
control one or both of the fluid regulator or the first heat exchanger to maintain the corrected turbine inlet flow within an inlet corrected flow threshold range; and
control one or both of the mechanical load or the first heat exchanger to maintain the corrected rotation speed within a corrected rotation speed threshold range.

2. The assembly of claim 1, further comprising a combustor, the combustor includes a combustion chamber, the combustor is connected in fluid communication with the partial-admission turbine along the fluid flow path, the partial-admission turbine is configured to direct the fluid to the combustion chamber along the fluid flow path, and the fluid is a fuel.

**3.** The assembly of claim 2, wherein the fuel is a hydrogen fuel.

**4.** The assembly of any preceding claim, further comprising a gas turbine engine core assembly, the gas turbine engine core assembly includes a combustor section, a turbine section, and an exhaust section, and the combustor section, the turbine section, the exhaust section, and the first heat exchanger form a core flow path for a combustion gas from the combustor section.

**5.** The assembly of any preceding claim, further comprising a second heat exchanger, the second heat exchanger further forms the fluid flow path, the fluid flow path is a closed-loop fluid flow path, and the closed-loop fluid flow path extends sequentially from the fluid source to the first heat exchanger, the partial-admission turbine, the second heat exchanger, and the fluid source.

**6.** The assembly of any preceding claim, wherein the mechanical load includes a bladed propulsor rotor.

**7.** The assembly of any preceding claim, further comprising a generator, and the mechanical load includes a generator rotor of the generator.

**8.** The assembly of any preceding claim, wherein each of the plurality of partial-admission turbine stages further includes a stator vane stage and at least one flow blocking structure.

**9.** The assembly of claim 8, wherein the plurality of partial-admission turbine stages includes a first stage and a plurality of downstream stages, and the at least one flow blocking structure of each of the downstream stages is clocked in a rotational direction relative to the at least one flow blocking structure of an immediately upstream stage of the plurality of partial-admission turbine stages.

**10.** The assembly of claim 8 or 9, wherein the at least one flow blocking structure has a circumferential span, and the circumferential span decreases sequentially for the plurality of partial-admission turbine stages.

**11.** A method comprising:

directing a fluid to a partial-admission turbine, the partial-admission turbine includes a rotational assembly, the rotational assembly includes a bladed turbine rotor, and the bladed turbine rotor is coupled to a mechanical load; driving rotation of the mechanical load with the rotational assembly; determining a corrected turbine inlet flow rate of the fluid at the partial-admission turbine;

determining a corrected rotation speed of the rotational assembly; controlling one or both of a flow rate or a temperature of the fluid directed to the partial-admission turbine to maintain the corrected turbine inlet flow rate within an inlet corrected flow threshold range; and controlling one or both of a rotational loading applied to the rotational assembly by the mechanical load or the temperature of the fluid directed to the partial-admission turbine to maintain the corrected rotation speed within a corrected rotation speed threshold range.

**12.** The method of claim 11, further comprising directing the fluid to a combustor with the partial-admission turbine, and the fluid is a fuel.

**13.** The method of claim 11 or 12, wherein directing the fluid to the partial-admission turbine includes directing a liquid phase of the fluid with a pump, changing the liquid phase of the fluid to a gaseous phase, and directing the gaseous phase of the fluid to the partial-admission turbine.

*FIG. 1*

EP 4 644 677 A1

CONTROLLER

124

20,22,94

96

86

92

60

44,52

90

24

58

12,70

FIG. 2A

CONTROLLER

124

20,22

12

70,94

98

96

86

92

60

44,52

90

24

58

FIG. 2B

EP 4 644 677 A1

FIG. 3A

FIG. 3B

FIG. 4A

FIG. 4B

FIG. 4C

FIG. 4D

FIG. 4E

FIG. 4F

FIG. 4G

FIG. 4H

FIG. 4I

FIG. 4J

FIG. 4K

FIG. 4L

EP 4 644 677 A1

```
                                                    16
┌─────────────────────┐
│   FLUID SOURCE      │           ┌──────────────┐
│                     │           │      │       │──66
│       64            │           │  ──┬─┼─┬──    │
│  ┌───────────────┐  │           │    └─┘       │
│  │               │  │           └──────┼───────┘
│  │   REGULATOR   │──┼───────────       │
│  │               │  │           │      ▼        62
│  │      76       │  │           │
│  └───────────────┘  │           │
└─────────────────────┘           │
    ▲                             │
    │                             │
    │                             │
    │     136    ┌─────132        │
    │       ┌────┤              ┌─┼──── 68
    │       │  ──┬─┬──  │       │ │ PA TURBINE │
    └───────┤    └─┘    ├───────┤ │            │
         134─┘  │       │       └─────────────┘
            │   ▼       │
           134 138
```

*FIG. 5*

*FIG. 6*

Europäisches
Patentamt
European
Patent Office
Office européen
des brevets

# EUROPEAN SEARCH REPORT

**Application Number**

EP 25 17 4100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/205934 A1 (PRATT & WHITNEY CANADA [CA]) 29 December 2016 (2016-12-29) | 11-13 | INV. F02C3/10 |
| A | * paragraph [0031] - paragraph [0033] * * paragraph [0043] - paragraph [0046] * * abstract; figure 1 * | 1-10 | F02C3/22 F02C7/12 F02C7/224 |
| | ----- | | |
| A | EP 4 239 170 A1 (ROLLS ROYCE PLC [GB]) 6 September 2023 (2023-09-06) * paragraph [0031] - paragraph [0035] * * paragraph [0042] - paragraph [0052] * * abstract; figures 1-4 * | 1-4,6,7, 11-13 | |
| | ----- | | |
| A | GB 262 784 A (OERLIKON MASCHF) 26 May 1927 (1927-05-26) * page 1; figures * | 1,4,6, 8-12 | |
| | ----- | | |
| A | US 11 028 724 B2 (KOREA INST ENERGY RES [KR]) 8 June 2021 (2021-06-08) * column 1, line 22 - line 30 * * column 3, line 40 - column 4, line 25 * * column 5, line 12 - line 42 * * abstract; figures * | 1,8,11 | |
| | ----- | | |

**TECHNICAL FIELDS SEARCHED (IPC)**

F02C

The present search report has been drawn up for all claims

| Place of search | Date of completion of the search | Examiner |
|---|---|---|
| The Hague | 16 September 2025 | O'Shea, Gearóid |

EPO FORM 1503 03.82 (P04C01)

## ANNEX TO THE EUROPEAN SEARCH REPORT
## ON EUROPEAN PATENT APPLICATION NO.

EP 25 17 4100

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2025

| Patent document cited in search report | | Publication date | Patent family member(s) | | Publication date |
|---|---|---|---|---|---|
| WO 2016205934 | A1 | 29-12-2016 | CA | 2933991 A1 | 25-12-2016 |
| | | | CN | 107923314 A | 17-04-2018 |
| | | | EP | 3109161 A1 | 28-12-2016 |
| | | | ES | 2699483 T3 | 11-02-2019 |
| | | | PL | 3109161 T3 | 30-04-2019 |
| | | | US | 2016376023 A1 | 29-12-2016 |
| | | | US | 2017267370 A1 | 21-09-2017 |
| | | | US | 2018346142 A1 | 06-12-2018 |
| | | | WO | 2016205934 A1 | 29-12-2016 |
| EP 4239170 | A1 | 06-09-2023 | EP | 4239170 A1 | 06-09-2023 |
| | | | US | 2023280032 A1 | 07-09-2023 |
| GB 262784 | A | 26-05-1927 | NONE | | |
| US 11028724 | B2 | 08-06-2021 | KR | 101831837 B1 | 23-02-2018 |
| | | | US | 2020095885 A1 | 26-03-2020 |
| | | | WO | 2018110827 A1 | 21-06-2018 |

For more details about this annex : see Official Journal of the European Patent Office, No. 12/82